# EUROPÄISCHE PATENTSCHRIFT

(11) **EP 1 305 566 B1**
(45) Veröffentlichungstag und Bekanntmachung des Hinweises auf die Patenterteilung: **23.03.2005**
(21) Anmeldenummer: 01953908.9
(22) Anmeldetag: 10.07.2001
(51) Int. Cl.: G01B 11/02, G02B 21/00

(54) **KONFOKALES ABBILDUNGSSYSTEM MIT GETEILTEM RETROREFLEKTOR**
CONFOCAL IMAGING SYSTEM HAVING A DIVIDED RETROREFLECTOR
SYSTEME IMAGEUR CONFOCAL A RETROREFLECTEUR EN DEUX PARTIES

(30) Priorität: 14.07.2000 DE 10034250
(43) Veröffentlichungstag der Anmeldung: 02.05.2003
(73) Patentinhaber: SIEMENS AKTIENGESELLSCHAFT, 80333 München (DE)
(72) Erfinder: SCHICK, Anton, 84149 Velden (DE); DOEMENS, Günter, 83607 Holzkirchen (DE)
(86) Internationale Anmeldenummer: PCT/DE2001/002573
(87) Internationale Veröffentlichungsnummer: WO 2002/008688

(56) Entgegenhaltungen:
- DE-A- 19 608 468
- DE-A- 19 837 249

## Beschreibung

Die Erfindung betrifft ein konfokales Abbildungssystem zur Erzeugung von Höhenwerten bzw. Höhenbildern.

Mit der konfokalen Mikroskopie können im mikroskopischen Bereich Höhenbilder aufgenommen werden. Um die dazu notwendige Variation der optischen Weglänge durchzuführen, wird nach dem Stand der Technik das Frontobjektiv in Richtung der optischen Weglänge hin- und herbewegt. Die hierbei erzielbare Datenrate ist jedoch auf wenige 100 Hz beschränkt.

Aus der Patentschrift DE 196 08 468 C2 ist ein System bekannt, in dem bildseitig die Variation der optischen Wegstrecke durch die Oszillation eines Empfängers oder eines zwischengeschalteten Umlenkspiegels variiert wird. Unter Verwendung eines Umlenkreflektors wird die zu bewegende Masse auf wenige Milligramm verringert und die Auslenkung gleichzeitig verdoppelt. Im Vergleich zur Oszillation eines Frontobjektives können dadurch etwa zehn mal höhere Datenraten erreicht werden. Die Oszillationsbewegung wird durch einen elektromagnetisch angetriebenen Resonanzschwinger bewirkt. In Verbindung mit einer parallelen Auslegung des gesamten konfokalen Systems, beispielsweise 32-fach, erreicht man hiermit Datenraten bis zu 200 kHz.

In vielen industriellen Anwendungen ist eine wesentlich höhere Datenrate erforderlich. Dies gilt insbesondere für die automatische Inspektion in der Elektronikfertigung. Somit ist entscheidend, inwieweit ein elektromechanisch angetriebener Oszillator mit etwa 2 kHz eine ausreichende Datenrate liefern kann.

Ein Problem der beschriebenen Systeme liegt in der starken Schallabstrahlung. Diese ist bei elektromagnetischen Antrieben bei den hier noch notwendigen Amplituden und Frequenzen kaum zu vermeiden.

Der Erfindung liegt die Aufgabe zugrunde, konfokale Abbildungssysteme hinsichtlich ihrer Datenrate und Zuverlässigkeit zu optimieren.

Die Lösung dieser Aufgabe erfolgt durch die Merkmalskombination des Anspruchs 1.

Die Erkenntnis der Erfindung liegt in der Trennung der bisher verwendeten, miteinander verbundenen Spiegeln, so dass separate Mikrospiegel vorliegen, die ebenfalls 90° gegeneinander angestellt sind. Die Darstellung als Mikrospiegel vermindert die in Schwingung zu setzende Masse. Der Antrieb kann elektrostatisch sein. Die erzielbaren Frequenzen liegen wesentlich höher als nach dem Stand der Technik, beispielsweise bei 10 kHz oder höher. Die Mikrospiegel werden gemeinsam mit der federnden Aufhängung vorzugsweise integral in Silizium ausgebildet. Neben der relativ geringen Schwingungsenergie in Kombination mit den kleineren Oberflächen wird die Schallabstrahlung wesentlich reduziert. Darüber hinaus stellt ein kristallines Silizium einen idealen Federwerkstoff dar. Dadurch kann die Lebensdauer des mechanischen Oszillators im Vergleich zu elektromagnetischen Antrieben deutlich verlängert werden und die Hysterese des Weg/Zeitverhaltens wird wesentlich verbessert.

Im folgenden wird anhand von schematischen Figuren ein Ausführungsbeispiel beschrieben.
Figur 1 zeigt schematisch einen Umlenkreflektor mit 90° gegeneinander angestellten Spiegeln,
Figur 2 zeigt den gesamten Strahlengang eines konfokalen Mikroskops mit Variation des Bildabstandes durch den bewegten Reflektor.

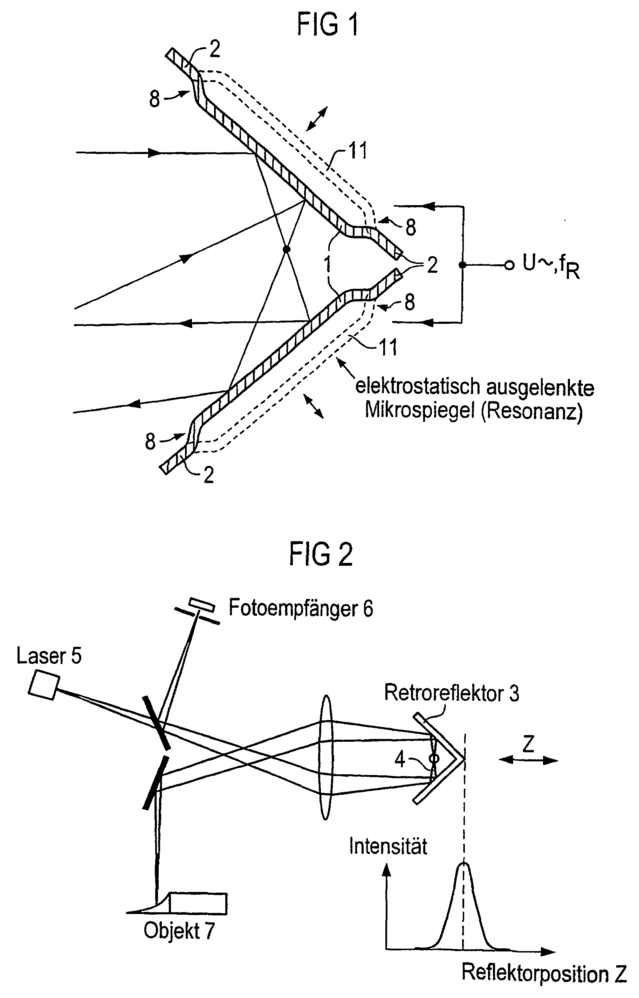

In der Figur 1 ist schematisch ein variabler Umlenkreflektor bestehend aus mikromechanisch hergestellten Mikrospiegeln 1, 11 dargestellt. Die Betriebsweise der Mikrospiegel entspricht der bisher bekannten Betriebsweise, indem die Spiegel gegeneinander um 90° gedreht oder angestellt sind, im Strahlengang des konfokalen Abbildungssystems platziert sind. Beide Spiegel 1, 11 schwingen synchron. Vorzugsweise schwingen die Spiegel bei ihrer Resonanzfrequenz f_{R}. Der Antrieb dieser Spiegel geschieht elektrostatisch. Die in Figur 1 eingetragenen Doppelpfeile geben die Schwingungsrichtung wieder. Die gemeinsame Spannung U- dient zur Anregung bieder Spiegel. Um besonders hohe Amplituden erreichen zu können, kann das Mikrospiegelsystem auch unter Vakuum mit erhöhten Betriebsspannungen betrieben werden. In diesem Fall können höhere Spannungen sowie höhere Feldstärken eingesetzt werden.

In Figur 2 ist das gesamte konfokale Abbildungssystem mit einem in z-Richtung schwingenden Retroreflektor 3 dargestellt. Anstelle dieses Retroreflektors 3 kann das System aus Mikrospiegeln eingesetzt werden. In Figur 2 ist ein Laser 5 dargestellt, dessen Strahlen über das konfokale Abbildungssystem geführt werden. Das System ist konfokal, da die Beleuchtungsquelle sowie der Fotoempfänger 6 punktförmig ausgelegt sind. Der Strahlengang des konfokalen Abbildungssystems ist derart gestaltet, dass dieser an einem Retroreflektor 3 um 180° versetzt zurückreflektiert wird. Die Schwingung des Retroreflektors 3 erfolgt in Richtung der optischen Achse des Systems an dieser Stelle. Beleuchtungsstrahl und Messstrahl werden weitestgehend durch die gleiche Optik geführt. Der vom Objekt zurückreflektierte Messstrahl wird jedoch bevor er auf den Laser 5 trifft, über einen Teilerspiegel auf einen Fotoempfänger 6 ausgekoppelt.

In dem Retroreflektor 3, dem Schlüsselelement in diesem Abbildungssystem, wird zwischen den Spiegeln ein reelles Zwischenbild der punktförmigen Lichtquelle ausgebildet. Indem das Spiegelsystem in Richtung der optischen Achse bewegt wird, bewegt sich das Zwischenbild zwischen den Spiegeln und folglich der Fokus im Objektbereich. Das am Objekt gestreute Licht durchläuft den Strahlengang in umgekehrter Richtung relativ zum Beleuchtungsstrahl und wird schließlich auf einen punktförmigen Detektor, Fotoempfänger 6, fokussiert. Die Gesamtkonfiguration der Anordnung lässt sich so gestalten, dass das Spiegelsystem bei geringer Masse mittels eines Oszillators mit hoher Geschwindigkeit bewegbar ist und entsprechend extrem schnelle Fokusbewegungen bzw. Höhendetektionen aufnehmen kann.

Verwendungen dieses Systems erfolgen in der Medizintechnik, beispielsweise zur Aufnahme von Hautbereichen in verschiedener Tiefe. Die Tiefe ist abhängig von dem Eindringvermögen des verwendeten Lichtes in die obersten Schichten der Haut. Durch die hohe Datenrate wird eine in-vivo-Darstellung der Hautbereiche möglich. Ein weiterer Anwendungsbereich ist beispielsweise die Ermittlung von dreidimensionalen Oberflächendaten in der industriellen Fertigung. Hier ist insbesondere der Verbindungs- und Montagebereich der Halbleiter und Baugruppenfertigung zu nennen. Dabei weisen Prüfobjekte in der Regel einen dreidimensionalen Charakter auf. Geprüft werden beispielsweise Form und Höhe von Löt-Bumps (Löthöcker). Diese sind insbesondere für die Flip-Chip-Montage wichtige Prozessparameter.

## Patentansprüche

1. Konfokales Abbildungssystem zur Aufnahme von Abstandswerten, bestehend aus:
- einer konfokalen Abbildungsoptik zur Abbildung eines Fokuspunktes auf einem Objekt (7),
- einer Beleuchtungseinheit zur Beleuchtung des Objektes (7) über die konfokale Abbildungsoptik,
- einem Fotoempfänger (6) zur Detektion des von dem Objekt zurückgestreuten Lichtes und zu dessen optoelektrischer Umwandlung,
- einem im optischen Strahlengang befindlichen und zur Bewegung des Fokuspunktes in Richtung der optischen Achse in Richtung der optischen Achse schwingenden Retroreflektors (3) aus mindestens zwei um 90° gegeneinander angestellten und synchron miteinander schwingenden Mikrospiegeln (1, 11),
- wobei die Mikrospiegel in Form einer Anordnung integral aus Silizium hergestellt sind und Spiegel (1, 11) und Federelemente (8) zwischen Spiegeln und Halterung (2) beinhalten.

2. Konfokales Abbildungssystem nach Anspruch 1, wobei die Mikrospiegelanordnung aus kristallinen Silizium besteht.

3. Konfokales Abbildungssystem nach einem der vorhergehenden Ansprüche, wobei die Mikrospiegel (1, 11) in Resonanz schwingen.

4. Konfokales Abbildungssystem nach einem der vorhergehenden Ansprüche, wobei die Mikrospiegelanordnung elektrostatisch antreibbar ist.

5. Konfokales Abbildungssystem nach einem der vorhergehenden Ansprüche, wobei die Mikrospiegelanordnung im Vakuum oder bei vermindertem Druck betreibbar ist.

## Claims

1. Confocal imaging system for the recording of distance values, consisting of:
- confocal imaging optics for imaging a focal point on an object (7),
- an illumination unit for illuminating the object (7) by means of the confocal imaging optics,
- a photodetector (6) for detecting the light backscattered by the object and for optoelectrically converting it,
- a retroreflector (3), consisting of at least two micromirrors (1, 11) which are set by 90° with respect to one another and oscillate synchronously with one another, which is located in the optical beam path and oscillates in the direction of the optical axis in order to move the focal point in the direction of the optical axis,
- in which the micromirrors are made integrally of silicon in the form of an arrangement and contain mirrors (1, 11) and spring elements (8) between the mirrors and a support (2).

2. Confocal imaging system according to Claim 1, in which the micromirror arrangement consists of crystalline silicon.

3. Confocal imaging system according to one of the preceding claims, in which the micromirrors (1, 11) oscillate in resonance.

4. Confocal imaging system according to one of the preceding claims, in which the micromirror arrangement is electrostatically drivable.

5. Confocal imaging system according to one of the preceding claims, in which the micromirror arrangement can be operated in a vacuum or at a reduced pressure.

## Revendications

1. Système confocal d'imagerie destiné à saisir des valeurs de distance, qui est constitué de :
- une optique confocale d'imagerie destinée à créer une image d'un point focal sur un objet (7),
- une unité d'éclairage destiné à éclairer l'objet (7) à travers l'optique confocale d'imagerie,
- un photorécepteur (6) destiné à détecter la lumière renvoyée par l'objet et à transformer celle-ci de manière optoélectrique,
- un rétroréflecteur (3) qui se trouve sur la marche optique des rayons et qui oscille dans la direction de l'axe optique de manière à déplacer le point focal dans la direction de l'axe optique, constitué d'au moins deux micro-miroirs (1, 11) qui sont disposés à un angle mutuel de 90° et qui oscillent ensemble de manière synchrone,
- dans lequel les micro-miroirs sont fabriqués sous la forme d'un agencement intégré en silicium et comprennent des miroirs (1, 11) et des éléments élastiques (8) situés entre les miroirs et un support (2).

2. Système confocal d'imagerie selon la revendication 1, dans lequel l'agencement de micro-miroirs est constitué de silicium cristallin.

3. Système confocal d'imagerie selon l'une des revendications précédentes, dans lequel les micro-miroirs (1, 11) oscillent en résonance.

4. Système confocal d'imagerie selon l'une des revendications précédentes, dans lequel l'agencement de micro-miroirs peut être entraîné électrostatiquement.

5. Système confocal d'imagerie selon l'une des revendications précédentes, dans lequel l'agencement de micro-miroirs peut fonctionner sous vide ou à une pression réduite.
